# FASCICULE DE BREVET EUROPEEN

(11) **EP 0 970 556 B1**
(45) Date de publication et mention de la délivrance du brevet: **13.07.2005**
(21) Numéro de dépôt: 98910799.0
(22) Date de dépôt: 20.02.1998
(51) Int. Cl.: H02J 1/02, H02M 3/28

(54) **DISPOSITIF D'ALIMENTATION FAIBLE COUT D'UNE PLURALITE DE MODULES ELECTRONIQUES INSTALLES DANS UNE BAIE**
PREISWERTE VERSORGUNGSEINRICHTUNG EINER MEHRZAHL VON ELEKTRONISCHEN SUBMODULEN IN EINEM BAUGRUPPENTRÄGER
LOW COST POWER SUPPLY DEVICE TO A PLURALITY OF ELECTRONIC MODULES INSTALLED IN A COMPARTMENT

(30) Priorité: 25.02.1997 FR 9702211
(43) Date de publication de la demande: 12.01.2000
(73) Titulaire: THALES AVIONICS S.A., 78141 Vélizy Villacoublay Cédex (FR)
(72) Inventeur: BEDOUET, Bernard Thomson-CSF S.C.P.I., F-94117 Arcueil Cedex (FR); LOISE, Dominique Thomson-CSF S.C.P.I., F-94117 Arcueil Cedex (FR); SARDIER, Patrick Thomson-CSF S.C.P.I., F-94117 Arcueil Cedex (FR)
(74) Mandataire: Beylot, Jacques
(86) Numéro de dépôt international: PCT/FR1998/000336
(87) Numéro de publication internationale: WO 1998/038719

(56) Documents cités:
- DE-A- 4 009 077
- GB-A- 2 248 981
- US-A- 5 477 091
- Y.S.LEE ET AL.: "Optimizing the design of switch-mode power supplies with battery back-up and power factor correction" IEEE, 30 avril 1995, pages 2051-2054, XP000059099

## Description

La présente invention concerne un dispositif d'alimentation en courant électrique d'une pluralité de modules rassemblés dans une baie électronique.

Elle s'applique notamment, mais non exclusivement, aux équipements électroniques embarqués à bord des aérodynes qui sont alimentés par un réseau de distribution de courant électrique continu. Il s'avère que la tension continue fournie par ce réseau est fortement perturbée, ce qui est préjudiciable pour les équipements électroniques qui seraient alimentés par une telle tension.

Ces perturbations proviennent tout d'abord du fait que les sources d'énergie qui alimentent ce réseau ne sont pas uniques. En effet, à l'arrêt des moteurs de l'aérodyne, le réseau est alimenté par des batteries, mais lorsque ceux-ci tournent, le réseau est alimenté par des génératrices électriques couplées sur les moteurs. Par ailleurs, un aérodyne en vol peut être soumis à de fortes perturbations électromagnétiques, et en particulier la foudre, ce qui peut entraîner d'importantes surtensions sur le réseau électrique ou à l'inverse des micro-coupures.
De même, les variations de charge de ce réseau et de consommation des équipements alimentés par celui-ci, ainsi que les transitoires de régulation des génératrices entraînent des variations de tension momentanées importantes.
Ainsi, pour une tension nominale de 28 Volts, on a constaté des variations de tensions pouvant atteindre 12 à 48 Volts. Par ailleurs, les surtensions provoquées par la foudre peuvent être beaucoup plus importantes.

Il est donc nécessaire de prévoir un dispositif de régulation de tension au niveau de chaque équipement embarqué, capable de supporter et traiter de telles variations de tension.

Par ailleurs, l'évolution des équipements embarqués à bord des aérodynes tend vers une architecture de plus en plus modulaire et de plus en plus intégrée comprenant des baies ou armoires dans lesquelles sont rassemblés une multiplicité de modules ayant des besoins en matière de tension d'alimentation qui varient d'un module à l'autre.

On a donc muni chaque module d'un dispositif d'alimentation comprenant tous les moyens de régulation et de conversion de tension continue nécessaires. Or, les composants permettant la régulation de telles variations de tension sont relativement volumineux et de coût élevé. Il en résulte que, appliquée à une multiplicité de modules, cette solution présente un coût élevé et conduit à augmenter de manière importante l'encombrement de chaque module, et à diminuer sa fiabilité car celui-ci doit alors absorber de fortes variations de tension.

Dans un autre cadre qui est celui des systèmes de distribution d'énergie électrique de haute qualité pour les systèmes informatiques ou de télécommunication opérant à partir d'un réseau d'alimentaion électrique en courant alternatif, il est connu, notamment par le brevet américain US 5,477,091 ou par l'article de Y.S.LEE et al., intitulé ''Optimizing the design of switch-mode power supply with battery back-up and power factor correction" et paru dans les IEEE, 30 avril 1995, pages 2051-2054, XP000059099, de passer par un prérégulateur central convertissant le courant alternatif du réseau d'alimentation en un courant continu prérégulé véhiculé par un bus de distribution de courant continu jusqu'à des convertisseurs-régulateurs de tension localisés dans ou à proximité immédiate des modules utilisateurs.
Cette architecture de distribution d'énergie électrique à partir d'un réseau d'alimentation électrique en courant alternatif permet de réduire le coût et l'encombrement des convertisseurs-régulateurs de tension localisés dans, ou à proximité immédiate des modules utilisateurs, étant donné qu'ils traitent une tension électrique déjà prérégulée donc sujette à des variations moindres que celles du réseau d'alimentation électrique en courant alternatif. Elle a par contre l'inconvénient d'être sensible à la propagation de pannes entre les modules utilisateurs dans la mesure où l'un d'eux, par suite d'un fonctionnement défectueux, peut mettre en court-circuit le bus de distribution de courant continu et priver d'alimentation tous les autres modules utilisateurs.

La présente invention a pour but de garder les avantages du faible coût et du faible encombrement d'une architecture de distribution d'énergie électrique à base d'un prérégulateur central et de convertisseurs-régulateurs distribués au niveau des modules utilisateurs tout en se protégeant contre la propagation des pannes entre modules utilisateurs.

Elle a pour objet un dispositif d'alimentation pour l'alimentation en courant électrique continu d'une pluralité de modules électroniques consommateurs, à partir d'une tension électrique continue perturbée, présentant une large plage de variation de tension. Ce dispositif comprend, d'une part, un module primaire d'alimentation qui est équipé de moyens d'écrêtage pour éliminer les impulsions de tension élevée, de moyens de filtrage pour éliminer les hautes fréquences et de moyens de pré-régulation, et qui fournit aux modules électroniques consommateurs une tension électrique prérégulée, et d'autre part, au niveau de chaque module électronique consommateur, des moyens de conversion de tension électrique fournissant, à partir de la tension électrique prérégulée par ledit module primaire d'alimentation, les tensions électriques adaptées au besoin du module. Il est remarquable en ce que ledit module primaire d'alimentation comporte des moyens élévateurs de tension et est relié, à chaque module électronique consommateur, par une ligne individuelle de distribution équipée à son départ de moyens de protection contre les court-circuits.

Le câblage nécessaire pour alimenter chaque module électronique consommateur à partir du module d'alimentation ne comprend que deux fils électriques, chaque module restant autonome quant à la production des tensions dont il a besoin. On évite ainsi d'avoir à prévoir un câblage spécifique pour amener chaque tension nécessaire entre un module d'alimentation commun et les modules consommateurs.
Cette solution permet donc de simplifier le câblage, et ainsi de réduire les coûts d'une manière importante.

Avantageusement, les moyens de protection contre les court-circuits placés en tête des lignes individuelles de distribution sont des disjoncteurs électroniques qui sont conçus pour s'ouvrir automatiquement en cas d'un court-circuit en aval, et pour se refermer automatiquement lorsqu'ils sont mis hors tension.

Avantageusement, le module primaire d'alimentation comprend une réserve d'énergie de type condensateur placée en sortie des moyens élévateurs de tension et palliant aux baisses de tension de courte durée.

Avantageusement, les moyens de conversion de tension au niveau de chaque module électronique consommateur comprennent des moyens d'isolation galvanique permettant de s'affranchir des perturbations qui pourraient intervenir sur la ligne de distribution de courant pré-régulé entre le module d'alimentation primaire et les modules consommateurs.

Un mode de réalisation du dispositif selon l'invention sera décrit ci-après, à titre d'exemple non limitatif, avec référence aux dessins annexés dans lesquels :
La figure 1 représente de manière schématique un équipement électronique embarqué à bord d'un aérodyne, rassemblant plusieurs modules consommateurs et un module d'alimentation primaire selon l'invention ;
La figure 2 montre le module d'alimentation primaire selon l'invention ;
La figure 3 montre un module d'alimentation secondaire selon l'invention, équipant chaque module consommateur ;

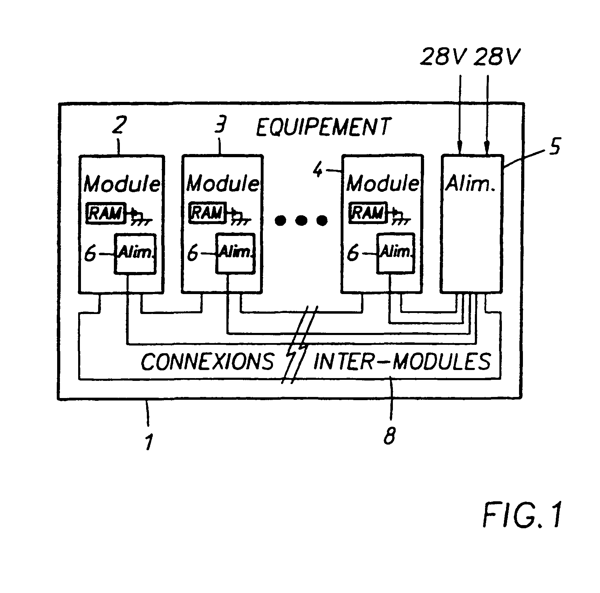

L'équipement électronique 1 représenté sur la figure 1 se présente sous la forme d'une baie ou d'une étagère dans laquelle sont insérés et interconnectés au moyen de liaisons 8 dites de "fond de panier", une pluralité de modules 2 à 5, dont un module d'alimentation primaire 5 selon l'invention, qui regroupe les fonctions de pré-régulation des tensions primaires à 28 Volts fournie par l'alimentation générale de l'aérodyne.

Généralement, un aérodyne comprend au moins deux réseaux de distribution de courant électrique continu, à savoir un réseau principal et un réseau de secours. Le module d'alimentation primaire est alors connecté à ces deux réseaux comme le montre la figure.

Plus précisément, le module d'alimentation primaire 5 assure les fonctions de limitation des surtensions, d'écrêtage des tensions transitoires liées à la foudre, de compensation des baisses de tension passagères, dans le but de délivrer aux autres modules 2 à 4 une tension pré-régulée à 28 Volts. Il s'avère en effet que les tensions fournies par les alimentations générales d'un aérodyne sont soumises à de fortes variations, de 12 à 48 Volts, ces variations pouvant être beaucoup plus importantes en transitoire.

Le module d'alimentation primaire 5 regroupe sur une seule carte électronique un ensemble de composants relativement encombrants et coûteux pour fournir à plusieurs modules une tension pré-régulée présentant une faible plage de variations, par exemple de 18 à 32 Volts, qui peut ensuite être adaptée par des convertisseurs de tension bon marché 6 intégrés dans chaque module et capables de fournir les tensions variées, utilisées par ces derniers.

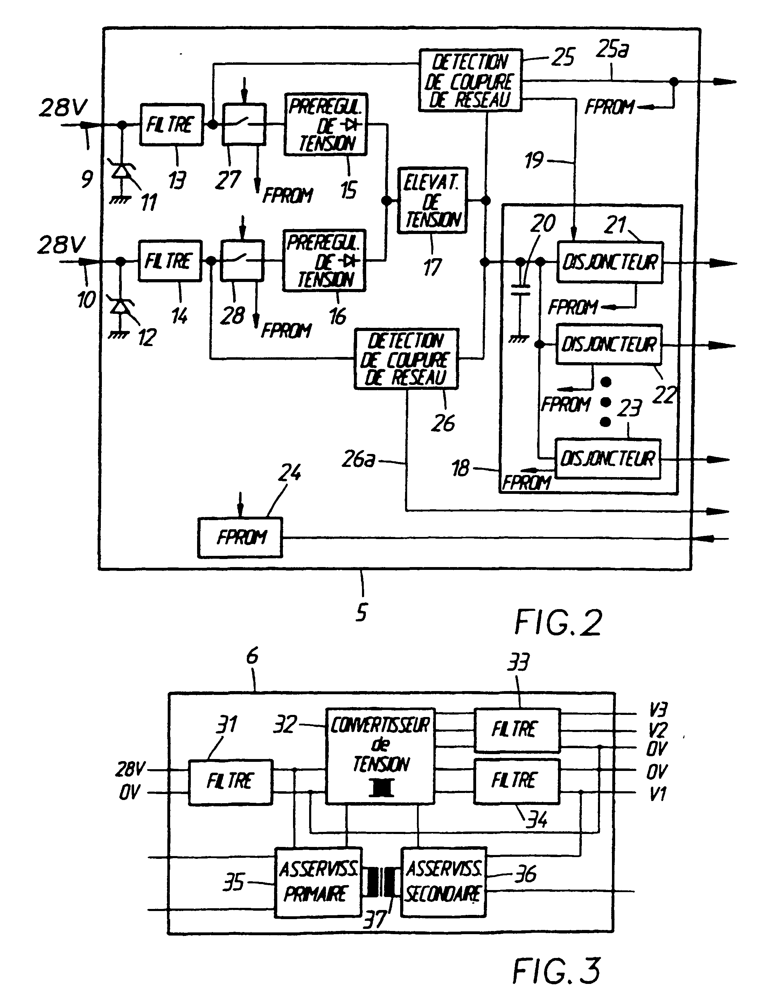

Sur la figure 2, le module d'alimentation primaire 5 comprend successivement en série, pour chaque ligne d'alimentation à 28 Volts de l'aérodyne appliquée en entrée :
- un dispositif d'écrêtage 11, 12, constitué par une diode Zener et/ou un dispositif similaire tel qu'une varistance, connecté en parallèle entre la ligne respective d'alimentation et la masse, ce dispositif permettant d'éliminer les impulsions supérieures à 80 Volts, par exemple dues à la foudre,
- un circuit de filtrage passe-bas 13, 14 relié à la sortie du dispositif d'écrêtage 11, 12,
- des moyens de commutation automatiques 27, 28 pour alimenter ou non le reste du circuit en fonction de la présence ou de l'absence de tension appliquée en entrée, ces moyens étant configurés de manière à donner la préférence à l'un des deux réseaux 9, 10 d'alimentation de l'aérodyne, lorsque ceux-ci sont tous les deux disponibles, et
- un circuit de pré-régulation de tension 15, 16 réalisant un écrêtage en tension et une limitation du courant en sortie du circuit de filtrage 13, 14.

Le module d'alimentation primaire 5 comprend en outre un circuit régulateur /élévateur de tension 17 connecté aux deux circuits de pré-régulation de tension 15, 16 pour appliquer au reste du circuit une tension de 28 Volts pendant quelques dizaines de secondes, par exemple 30 secondes, lorsque la tension en entrée est descendue à 12 Volts minimum, et un circuit de distribution de courant 18 connecté à la sortie du circuit élévateur de tension 17. Le circuit de distribution 18 comprend une réserve d'énergie 20 constituée par exemple par une batterie de condensateurs, et un ensemble de disjoncteurs électroniques 21 à 23 qui fournissent respectivement aux autres modules 2 à 4 de la baie 1 une tension continue à 28 Volts pré-régulée.

Il est à noter que la réserve d'énergie 20 est disposée en sortie du circuit régulateur / élévateur de tension 17 qui lui applique donc une tension élevée et à peu près constante. Comme la charge d'un condensateur est proportionnelle à la tension appliquée entre ses bornes, l'énergie stockée dans la réserve d'énergie 20 reste donc à peu près constante et élevée quelque soit le niveau de la tension fournie par le réseau.
Grâce à ces dispositions, le module d'alimentation primaire 5 est capable de compenser des coupures de quelques dizaines de millisecondes (20 à 200 ms par exemple) en maintenant les alimentations vers les modules 2 à 4.

Les disjoncteurs 21 à 23 sont conçus de manière à s'ouvrir automatiquement en cas de court-circuit en aval, et à se refermer automatiquement lorsqu'ils sont mis hors tension. Ils assurent ainsi une protection séparée du module d'alimentation primaire 5 contre les courts-circuits qui peuvent se produire au niveau des modules 2 à 4 ou des connexions entre ces derniers et les disjoncteurs, et donc garantissent la disponibilité de l'alimentation et la non propagation des pannes, en cas de court-circuit sur un module.

Les circuits de pré-régulation 15, 16 comprennent chacun une diode de blocage permettant d'éviter la décharge des condensateurs 20 vers les réseaux 9, 10, en cas de coupure du circuit.

Par ailleurs, le module 5 comprend en outre deux dispositifs de détection de coupure de réseau 25, 26 respectivement connectés en parallèle entre la sortie des filtres 13, 14 et la sortie du circuit élévateur de tension 17. Lorsque la durée de coupure des réseaux dépasse le temps de couverture de la réserve d'énergie 20, les dispositifs de détection de coupure de réseau 25, 26 indiquent aux modules 2 à 4, à l'aide des signaux 25a et 26a qu'il y aura perte totale d'alimentation dans un délai proche de quelques millisecondes (2 à 20 ms). L'apparition des signaux 25a et 26a déclenchent un processus de mémorisation en mémoire secourue par pile ou condensateur de certains paramètres de vol critiques élaborés notamment par les modules 2 à 4. Le temps d'écriture dans la mémoire est de l'ordre de 2 à 20 ms, tandis que le temps de mémorisation nécessaire de ces paramètres est en général compris entre 200 ms et 5 s.

Certains disjoncteurs électroniques 21 à 23 peuvent aussi s'ouvrir à l'aide d'un signal 19 issu du détecteur 25 de réseau principal 9 lors de la perte de celui-ci et lorsque l'on ne veut pas alimenter un ou plusieurs modules 2 à 4 avec le réseau de secours, afin d'éviter une charge trop importante de celui-ci.

Le module 5 comprend également une mémoire de maintenance 24 non volatile, par exemple de type FPROM permettant de mémoriser tous les événements susceptibles de faciliter la maintenance du module, comme par exemple l'ouverture d'un disjoncteur 21 à 23 et les coupures de réseau ayant entraîné des changements d'état des commutateurs 27, 28. Le contenu de cette mémoire 24 est mis à jour par les modules consommateurs 2 à 4 qui y ont accès en écriture et en lecture pour vérifier chaque écriture. Cette mémoire peut également être mise à jour par les détecteurs de coupure 25, 26, et par les disjoncteurs 21 à 23 et les dispositifs de commutation 27, 28, qui présentent à cet effet, une sortie binaire donnant l'état, respectivement, du disjoncteur ou du dispositif de commutation.

Ce module d'alimentation primaire 5 fournit aux autres modules 2, 4 de l'équipement 1 une tension pré-régulée qui peut ensuite être adaptée par les autres modules au moyen de blocs d'alimentation secondaire intégrés 6, présentant une structure beaucoup plus simple et moins encombrante, et par conséquent, moins coûteuse que s'il avait fallu adapter directement les tensions fournies par chaque réseau de l'aérodyne aux besoins de chaque module.

Ainsi, sur la figure 3, chaque bloc d'alimentation secondaire 6 comprend un filtre d'entrée 31 recevant la tension de 28 Volts pré-régulée, permettant d'éliminer les hautes fréquences qui peuvent apparaître au niveau des lignes de connexion entre les disjoncteurs 21 à 23 et les blocs d'alimentation 6. La sortie du filtre d'entrée 31 est connectée à un convertisseur de tension continu 32 comprenant un bloc primaire et un bloc secondaire isolés galvaniquement par un transformateur d'impulsions. L'alimentation des modules est ainsi isolée galvaniquement du module d'alimentation primaire 5. Le convertisseur 32 est par exemple de type à découpage "Flyback" à commutation à 0 Volt. Le bloc secondaire permet de fournir les différentes tensions V1, V2, V3, nécessaires au module, par exemple 5 V et +/- 15 V, qui sont préalablement filtrées par des filtres de sortie 33, 34 permettant d'éliminer les hautes fréquences éventuellement introduites par le convertisseur à découpage 32.

Par ailleurs, le convertisseur 32 est asservi en tension par un circuit de commande comprenant un circuit primaire 35 recevant des signaux de commande, et un circuit secondaire 36 isolés fournissant des signaux de contrôle, ces deux circuits 35, 36 étant isolés galvaniquement par un transformateur d'impulsions 37. Le circuit de commande secondaire 36 effectue la mesure d'une des tensions en sortie des filtres 33, 34, par exemple la tension V1, pour générer un signal de commande qui est transmis au circuit primaire 35. Le circuit primaire 35 transforme ce signal en fonction d'une puissance de sortie maximum de consigne, en un second signal de commande qui est appliqué aux transistors de commutation du convertisseur à découpage 32. La régulation des autres tensions de sortie V2, V3, est obtenue grâce au couplage magnétique réalisé par le transformateur du convertisseur 32 et grâce à la symétrie des circuits de celui-ci. Un tel convertisseur ne nécessite aucune charge minimum au niveau de ses sorties.

## Revendications

1. Dispositif d'alimentation pour l'alimentation en courant électrique continu d'une pluralité de modules électroniques consommateurs (2 à 4), à partir d'une tension électrique continue perturbée présentant une large plage de variation de tension, ce dispositif comprenant, d'une part, un module primaire d'alimentation (5) qui est équipé de moyens d'écrêtage (11, 12) pour éliminer les impulsions de tension élevée, de moyens de filtrage (13, 14) pour éliminer les hautes fréquences et de moyens de prérégulation (15, 16), et qui fournit aux modules électroniques consommateurs (2 à 4) une tension prérégulée et, d'autre part, au niveau de chaque module électronique consommateur (2 à 4), des moyens de conversion de tension électrique (6) fournissant, à partir de la tension électrique prérégulée par ledit module primaire d'alimentation (5), les tensions électriques adaptées aux besoins du module,
**caractérisé en ce que** ledit module primaire d'alimentation (5) comporte des moyens élévateurs de tension (17) et est relié, à chaque module électronique consommateur (2 à 4), par une ligne individuelle de distribution équipée à son départ, de moyens de protection contre les courts-circuits (21 à 23).

2. Dispositif selon la revendication 1, **caractérisé en ce que** lesdits moyens de protection contre les court-circuits sont des disjoncteurs électroniques (21 à 23).

3. Dispositif selon la revendication 1, **caractérisé en ce que** le module primaire d'alimentation (5) comprend une réserve d'énergie (20) de type condensateur placée en sortie des moyens élévateurs de tension (17) et palliant aux baisses de tension de courte durée.

4. Dispositif selon la revendication 2, **caractérisé en ce que** les disjoncteurs électroniques (21 à 23) sont conçus pour s'ouvrir automatiquement en cas de court-circuit en aval, et pour se refermer automatiquement lorsqu'ils sont mis hors tension.

5. Dispositif selon la revendication 3, **caractérisé en ce que** la réserve d'énergie (20) couplée aux moyens élévateurs de tension (17) permet de compenser des coupures de courte durée, tandis que les modules consommateurs (2 à 4) comprennent une réserve d'énergie de plus basse puissance, mais de plus longue durée.

6. Dispositif selon l'une des revendications précédentes, **caractérisé en ce que** le module d'alimentation (5) est connecté à deux réseaux d'alimentation électriques (9, 10), et comprend :
- deux dispositifs d'écrêtage (11, 12) connectés respectivement aux deux réseaux,
- deux circuits de filtrage (13, 14) connectés respectivement aux deux réseaux,
- deux dispositifs de commutation automatiques (27, 28) connectés respectivement en sortie des deux circuits de filtrage (13, 14),
- deux circuits de pré-régulation (15, 16) connectés respectivement aux deux dispositifs de commutation (27, 28),
- un dispositif régulateur / élévateur de tension (17) connecté aux deux circuits de pré-régulation (15, 16), et
- un circuit de distribution 18 comprenant une réserve d'énergie (20) et un ensemble de disjoncteurs électroniques (21 à 23) reliés respectivement aux convertisseurs de tension continue (6) des modules consommateurs (2 à 4).

7. Dispositif selon l'une des revendications précédentes, **caractérisé en ce que** les moyens de conversion de tension (6) des modules consommateurs (2 à 4) comprennent un convertisseur (32) de tension continue à découpage fournissant une ou plusieurs tensions continues (V1 à V3).

8. Dispositif selon l'une des revendications précédentes, **caractérisé en ce que** la tension continue en sortie des moyens de conversion (6) est asservie par un circuit d'asservissement (35, 36, 37) comprenant un bloc primaire (35) et un bloc secondaire (36) isolés galvaniquement.

9. Dispositif selon l'une des revendications précédentes, **caractérisé en ce que** les moyens de conversion (6) des modules consommateurs (2 à 4) comprennent des moyens d'isolation galvanique permettant d'isoler chaque module de sa ligne d'alimentation.

10. Dispositif selon l'une des revendications précédentes, **caractérisé en ce que** le module d'alimentation primaire (5) comprend une mémoire non volatile (24) dans laquelle sont mémorisés tous les événements susceptibles de faciliter la maintenance du module.

11. Dispositif selon la revendication 10, **caractérisé en ce que** la mémoire (24) est commandée en lecture et en écriture par les modules consommateurs (2 à 4), et en écriture seule par les détecteurs (25, 26), par les disjoncteurs (21 à 13) et par les dispositifs de commutation (27, 28).

## Patentansprüche

1. Versorgungseinrichtung zur Versorgung mehrerer elektronischer Verbrauchermodule (2 bis 4) mit Gleichstrom ausgehend von einer gestörten Gleichspannung, die einen großen Spannungsänderungsbereich aufweist, wobei diese Einrichtung einerseits einen Primärversorgungsmodul (5), der mit Mitteln zur Spitzenbegrenzung (11, 12), um die Hochspannungsimpulse zu unterdrücken, mit Filtermitteln (13, 14), um hohe Frequenzen zu unterdrücken, und mit Vorregelungsmitteln (15, 16) versehen ist und der den elektronischen Verbrauchermodulen (2 bis 4) eine vorgeregelte Spannung liefert, und andererseits in Höhe jedes elektronischen Verbrauchermoduls (2 bis 4) Spannungswandlermittel (6) aufweist, die ausgehend von der vom Primärversorgungsmodul (5) vorgeregelten Spannung die Spannungen liefert, die an die Erfordernisse des Moduls angepasst sind,
**dadurch gekennzeichnet, dass** der Primarversorgungsmodul (5) Spannungserhöhungsmittel (17) aufweist und mit jedem elektronischen Verbrauchermodul (2 bis 4) über eine eigene Verteilungsleitung verbunden ist, die an ihrem Anfang mit Mitteln (21 bis 23) zum Schutz vor Kurzschlüssen ausgestattet ist.

2. Vorrichtung nach Anspruch 1, **dadurch gekennzeichnet, dass** die Mittel zum Schutz vor Kurzschlüssen elektronische Trennschalter (21 bis 23) sind.

3. Vorrichtung nach Anspruch 1, **dadurch gekennzeichnet, dass** der Primärversorgungsmodul (5) eine Reserve-Energiequelle (20) von der Art Kondensator aufweist, der am Ausgang der Spannnungserhöhungsmittel (17) angeordnet ist und die kurzzeitigen Spannungsabfälle ausgleicht.

4. Vorrichtung nach Anspruch 2, **dadurch gekennzeichnet, dass** die elektronischen Trennschalter (21 bis 23) so gestaltet sind, dass sie sich bei einem stromabwärts hinteren Kurzschluss automatisch öffnen und sich automatisch schließen, wenn sie freigeschaltet werden.

5. Vorrichtung nach Anspruch 3, **dadurch gekennzeichnet, dass** die mit den Spannungserhöhungsmitteln (17) gekoppelte Reserve-Energiequelle (20) es ermöglicht, kurzzeitige Abschaltungen zu kompensieren, während die Verbrauchermodule (2 bis 4) eine Reserve-Energiequelle mit geringerer Leistung, aber längerer Dauer aufweisen.

6. Vorrichtung nach einem der vorhergehenden Ansprüche, **dadurch gekennzeichnet, dass** der Versorgungsmodul (5) mit zwei Stromversorgungsnetzen (9, 10) verbunden ist und aufweist:
- zwei Spitzenbegrenzungsvorrichtungen (11, 12), die mit den beiden Netzen verbunden sind,
- zwei Filterkreise (13, 14), die mit den beiden Netzen verbunden sind,
- zwei automatische Schaltvorrichtungen (27, 28), die mit den Ausgangen der beiden Filterkreise (13, 14) verbunden sind,
- zwei Vorregelkreise (15, 16), die mit den beiden Schaltvorrichtungen (27, 28) verbunden sind,
- eine Spannungsregelungs-/-erhöhungsvorrichtung (17), die mit den beiden Vorregelkreisen (15, 16) verbunden ist, und
- einen Verteilerstromkreis (18), der eine Reserve-Energiequelle (20) und eine Einheit von elektronischen Trennschaltern (21 bis 23) aufweist, die mit den Gleichspannungswandlern (6) der Verbrauchermodule (2 bis 4) verbunden sind.

7. Vorrichtung nach einem der vorhergehenden Ansprüche, **dadurch gekennzeichnet, dass** die Spannungswandlermittel (6) der Verbrauchermodule (2 bis 4) einen Gleichspannungs-Schaltwandler (32) aufweisen, der eine oder mehrere Gleichspannungen (V1 bis V3) liefert.

8. Vorrichtung nach einem der vorhergehenden Ansprüche, **dadurch gekennzeichnet, dass** die Gleichspannung am Ausgang der Wandlermittel (6) von einem Regelkreis (35, 36, 37) geregelt wird, der einen Primärblock (35) und einen Sekundärblock (36) aufweist, die galvanisch isoliert sind.

9. Vorrichtung nach einem der vorhergehenden Ansprüche, **dadurch gekennzeichnet, dass** die Wandlermittel (6) der Verbrauchermodule (2 bis 4) Mittel zur galvanischen Isolierung aufweisen, die es ermöglichen, jeden Modul von seiner Versorgungsleitung zu isolieren.

10. Vorrichtung nach einem der vorhergehenden Ansprüche, **dadurch gekennzeichnet, dass** der Primärversorgungsmodul (5) einen nicht flüchtigen Speicher (24) aufweist, in dem alle Ereignisse gespeichert sind, die die Wartung des Moduls vereinfachen können.

11. Vorrichtung nach Anspruch 10, **dadurch gekennzeichnet, dass** der Speicher (24) von den Verbrauchermodulen (2 bis 4) lese- und schreibgesteuert wird, und von den Detektoren (25, 26), den Trennschaltern (21 bis 23) und den Schaltvorrichtungen (27, 28) nur schreibgesteuert wird.

## Claims

1. Supply device for supplying DC electric current to a plurality of consumer electronic modules (2 to 4), on the basis of a perturbed DC electrical voltage exhibiting a wide voltage variation range, this device comprising, on the one hand, a primary supply module (5) which is equipped with clipping means (11, 12) for eliminating the pulses of high voltage, with filtering means (13, 14) for eliminating the high frequencies and with preregulating means (15, 16), and which provides the consumer electronic modules (2 to 4) with a preregulated voltage and, on the other hand, at the level of each consumer electronic module (2 to 4), electrical voltage conversion means (6) providing, on the basis of the electrical voltage preregulated by the said primary supply module (5), the electrical voltages suitable for the requirements of the module, **characterized in that** the said primary supply module (5) comprises voltage step-up means (17) and is linked, to each consumer electronic module (2 to 4), by an individual distribution line equipped at its start, with means of protection against short-circuits (21 to 23) .

2. Device according to Claim 1, **characterized in that** the said means of protection against short-circuits are electronic cutouts (21 to 23).

3. Device according to Claim 1, **characterized in that** the primary supply module (5) comprises an energy reserve (20) of capacitor type placed at the output of the voltage step-up means (17) and alleviating the voltage drops of short duration.

4. Device according to Claim 2, **characterized in that** the electronic cutouts (21 to 23) are designed to open automatically in case of a downstream short-circuit, and to reclose automatically when they are subjected to voltage.

5. Device according to Claim 3, **characterized in that** the energy reserve (20) coupled to the voltage step-up means (17) makes it possible to compensate for short-duration cutouts, whilst the consumer modules (2 to 4) comprise an energy reserve of lower power but longer duration.

6. Device according to one of the preceding claims, **characterized in that** the supply module (5) is connected to two electrical supply networks (9, 10), and comprises:
- two clipping devices (11, 12) connected respectively to the two networks,
- two filter circuits (13, 14) connected respectively to the two networks,
- two automatic switching devices (27, 28) connected respectively at the output of the two filter circuits (13, 14),
- two preregulating circuits (15, 16) connected respectively to the two switching devices (27, 28),
- a voltage step-up/regulator device (17) connected to the two preregulating circuits (15, 16), and
- a distribution circuit 18 comprising an energy reserve (20) and a set of electronic cutouts (21 to 23) linked respectively to the DC voltage converters (6) of the consumer modules (2 to 4).

7. Device according to one of the preceding claims, **characterized in that** the voltage conversion means (6) of the consumer modules (2 to 4) comprise a chopped DC voltage converter (32) providing one or more DC voltages (V1 to V3).

8. Device according to one of the preceding claims, **characterized in that** the DC voltage at the output of the conversion means (6) is slaved by a slaving circuit (35, 36, 37) comprising a primary block (35) and a secondary block (36) which are galvanically isolated.

9. Device according to one of the preceding claims, **characterized in that** the conversion means (6) of the consumer modules (2 to 4) comprise galvanic isolation means making it possible to isolate each module from its supply line.

10. Device according to one of the preceding claims, **characterized in that** the primary supply module (5) comprises a non-volatile memory (24) in which all the events liable to facilitate the maintenance of the module are stored.

11. Device according to Claim 10, **characterized in that** the memory (24) is controlled in read mode and in write mode by the consumer modules (2 to 4), and in write-only mode by the detectors (25, 26), by the cutouts (21 to 23) and by the switching devices (27, 28).
